# EUROPEAN PATENT APPLICATION

(11) **EP 2 711 803 A2**
(43) Date of publication of application: **26.03.2014**
(21) Application number: 13185798.9
(22) Date of filing: 24.09.2013
(51) Int. Cl.: G06F 1/26

(54) **Host apparatus and method of charging user terminal apparatus**

(30) Priority: 24.09.2012 KR 20120106077
(71) Applicant: Samsung Electronics Co., Ltd, Gyeonggi-do 443-742 (KR)
(72) Inventor: Lee, Hae-ho, Gyeonggi-do (KR); Cho, Kang-seok, Gyeonggi-do (KR); Park, Cha-hoon, Seoul (KR); Lee, Man-hee, Gyeonggi-do (KR); Lee, Ba-ra, Gyeonggi-do (KR); Kim, Mi-young, Seoul (KR); Seo, Min-ho, Gyeonggi-do (KR); Jang, Won-seok, Gyeonggi-do (KR)
(74) Representative: Walaski, Jan Filip

(57) **Abstract**

A host apparatus, a user terminal apparatus, a method of controlling a charger, and a method of communication thereof. The host apparatus includes: a connector which includes a terminal to which the user terminal apparatus is connected; a power supplier which supplies power to the connector; a controller which, if the host apparatus operates in a first operation mode when the user terminal apparatus is connected to the connector through the terminal, charges a battery of the user terminal apparatus with the power supplied from the power supplier; and a charging maintainer which, if the host apparatus operates in a second operation mode, charges the battery with power supplied from the power supplier.

## Description

The present invention generally relates to a host apparatus and a method of charging a user terminal apparatus connectable to the host apparatus, more particularly, to a host apparatus which effectively charges a battery of a user terminal apparatus and communicates data with the user terminal apparatus, a user terminal apparatus, a method of controlling a charger, and a method of a communication using the same.

A portable user terminal apparatus has had and still has wide applications. Examples of the portable user terminal apparatus include a mobile phone, a smart phone, a personal digital assistant (PDA), a Netbook, a camera, a camcorder, a portable game machine, and so on. Such a user terminal apparatus includes a battery and storage. If a user connects the user terminal apparatus to a host apparatus, the battery of the user terminal apparatus is charged with power supplied from the host apparatus.

Here, if the host apparatus operates in a standby mode, a power saving mode, or the like, the user terminal apparatus is disconnected from the host apparatus. Therefore, the battery of the user terminal apparatus is no longer charged. In other words, the host apparatus operates in a battery saving mode to block a controller of the host apparatus from operating, and thus the user terminal apparatus is not supplied with charging power from the host apparatus. Therefore, the host apparatus is required to normally operate in order to charge the user terminal apparatus in which it is connected, thereby limiting charging of the user terminal apparatus battery and wasting the battery.

Also, the user terminal apparatus can be connected to the host apparatus to use the storage of the user terminal apparatus as an external storage of the host apparatus. Here, a communication data capacity between a controller and the storage of the user terminal apparatus is much smaller than a communication data capacity of an external connection terminal of the user terminal apparatus. For example, if the communication data capacity between the controller and the storage of the user terminal apparatus is set to 500 Mbps, a bottle neck phenomenon occurs. In other words, the external connection terminal which operates at 2 Gbps or more according to a type thereof supported by the user terminal apparatus does not operate at 500 Mbps or more.

Therefore, if a standard of a communication path between the controller and the storage of the user terminal apparatus is designed to a higher capacity, an additional logic should be designed, and more space will be occupied. As a result, there is a limit to an increase in the communication data capacity between the controller and the storage of a user terminal apparatus.

Exemplary embodiments address at least the above problems and/or disadvantages and other disadvantages not described above. Also, the exemplary embodiments are not required to overcome the disadvantages described above, and an exemplary embodiment may not overcome any of the problems described above.

Additional features and utilities of the present general inventive concept will be set forth in part in the description which follows and, in part, will be obvious from the description, or may be learned by practice of the general inventive concept.

The exemplary embodiments provide a host apparatus and a user terminal apparatus which improve a charging method therebetween and improve a data communication speed, a method of controlling a charger, and a method of a communication using the same.

Exemplary embodiments of the present inventive concept provide a host apparatus connected to a user terminal apparatus. The host apparatus may include a connector which includes a terminal to which the user terminal apparatus is connected, a power supplier which supplies power to the connector, a controller which, if the host apparatus operates in a first operation mode when the user terminal apparatus is connected to the connector through the terminal, charges a battery of the user terminal apparatus with the power supplied from the power supplier and a charging maintainer which, if the host apparatus operates in a second operation mode, charges the battery with power supplied from the power supplier.

The charging maintainer may determine a state in which an intensity of a voltage supplied to the controller is smaller than a preset intensity, and thus an operation of the controller stops, as the second operation mode, and charge the battery with the power supplied from the power supplier only in the second operation mode.

The controller may maintain a communication connection to the user terminal apparatus in the first operation mode and stop the operation thereof in the second operation mode. The charging maintainer may maintain the communication connection to the user terminal apparatus in the second operation mode.

If the user terminal apparatus senses that the user terminal apparatus is connected to the connector, the controller may convert the power into an intensity determined according to a type of the battery of the user terminal apparatus and charge the battery with the converted power according standards complying with a type of the terminal.

The type of the terminal may be at least one of universal serial bus (USB) 2.0, USB 3.0, high definition multimedia interface (HDMI), and Institute of Electrical and Electronics Engineers (IEEE) 1394 interfaces.

The host apparatus may further include a display which displays a user interface (UI) screen which is to select one of a charging mode and a data communication mode.

Exemplary embodiments of the present inventive concept also provide a charging method of a host apparatus communicating with a user terminal apparatus. The charging method may include recognizing a connection to the user terminal apparatus, determining an operation mode of the host apparatus and if the determined operation mode is a first operation mode, charging the user terminal apparatus, wherein if the host apparatus is in a second operation mode, a communication connection between the user terminal apparatus and the host apparatus is maintained to charge the user terminal apparatus.

If an intensity of a voltage supplied to a control of the host apparatus is greater than a preset intensity, the operation mode of the host apparatus may be determined as a first operation mode. If the intensity of the voltage is smaller than the preset intensity, the operation mode of the host apparatus may be determined as the second operation mode.

If the operation mode of the host apparatus is the first operation mode, the communication connection between the host apparatus and the user terminal apparatus may be maintained, and a battery of the user terminal apparatus may be charged.

If the operation mode of the host apparatus is the second operation mode, although an operation of the controller of the host apparatus stops, the communication connection between the host apparatus and the user terminal apparatus may be maintained.

The charging of the user terminal apparatus may include: if the connection of the user terminal apparatus is sensed, converting the power into an intensity determined according to a type of the battery of the user terminal apparatus; and charging the battery with the converted power according to standards complying with a type of a terminal.

The type of the terminal may be at least one of USB 2.0, USB 3.0, HDMI, SATA, and IEEE 1394 interfaces.

The charging method may further include: displaying a UI screen for selecting one of a charging mode and a data communication mode.

Exemplary embodiments of the present inventive concept also provide a user terminal apparatus communicating with a host apparatus. The user terminal apparatus may include: a connector which includes a terminal to which the host apparatus is connected, a storage which stores data, a controller which controls the storage to store data input through the connector; and a changer which, if the connector is connected to the host apparatus through the terminal, provides a first communication path between the storage and the host apparatus.

If data reading/writing commands are received from the host apparatus through the connector, the changer may block a second communication path between the controller and the storage and transmit the data through the first communication path according to the data reading/writing commands.

The user terminal apparatus may further include a rechargeable battery. If the user terminal apparatus is connected to the host apparatus through the connector and is supplied with power from the host apparatus, the changer may provide a charging path between the controller and the connector, and the controller may charge the rechargeable battery with the supplied power.

The user terminal apparatus may further include a display which displays a UI screen for selecting one of a charging mode and a storage mode.

The connector may be at least one of USB 2.0, USB 3.0, SATA, and IEEE 1394 interfaces.

Exemplary embodiments of the present inventive concept also provide a communication method of a user terminal apparatus communicating with a host apparatus. The communication method may include recognizing a connection to the host apparatus, if the user terminal apparatus is connected to the host apparatus, forming a first communication path between the host apparatus and a storage of the user terminal apparatus and if the user terminal apparatus is disconnected from the host apparatus, forming a second communication path between a controller of the user terminal apparatus and the storage.

The communication method may further include receiving data reading/writing commands from the host apparatus, blocking the second communication path and storing the data in the storage through the first communication path according to the received data reading/writing commands.

The communication method may further include charging a battery with power supplied from the host apparatus through a charging path.

The communication method may further include: displaying a UI screen for selecting one of a charging mode and a storage mode.

The user terminal apparatus may communicate with the host apparatus through at least one of USB 2.0, USB 3.0, SATA, and IEEE 1394 interfaces.

Exemplary embodiments of the present inventive concept also provide a host apparatus configured to connect to a user terminal apparatus, the host apparatus comprising: a connector to connect to the user terminal apparatus; a controller to control a supply of power to the user terminal apparatus to charge the user terminal apparatus with power based on an operation mode of the host apparatus when the user terminal apparatus is connected, a charging maintainer to supply power to the user terminal apparatus to charge the user terminal apparatus when the controller does not supply power to the user terminal apparatus while connected.

In an exemplary embodiment, the controller controls supply of power to the user terminal apparatus when the controller detects that the host apparatus is in a first mode of operation of communicating data with the user terminal apparatus, and the controller controls to stop supply of power to the user terminal apparatus when the controller detects that the host apparatus is in a second mode of operation not communicating with the user terminal apparatus.

In an exemplary embodiment, the charging maintainer senses an amount of a supplied voltage thereto, and if the sensed amount of supplied voltage is less than a preset amount, determines that the operation of the controller has stopped, and determines that the stopped state of the controller is a state in which the host apparatus operates in the second operation mode.

In an exemplary embodiment, the charging maintainer charges the user terminal apparatus only when the host apparatus operates in the second operation mode.

In an exemplary embodiment, the host apparatus further comprises a power supplier which supplies the power to the controller and the charge maintainer.

These and/or other features and utilities of the present invention will become apparent and more readily appreciated from the following description of the embodiments, taken in conjunction with the accompanying drawings in which:
FIG. 1 is a view illustrating a user terminal apparatus connected to a host apparatus according to an exemplary embodiment of the present general inventive concept;
FIG. 2 is a block diagram illustrating a host apparatus according to an exemplary embodiment of the present general inventive concept;
FIG. 3 is a block diagram illustrating a detailed structure of a host apparatus connected to a user terminal apparatus through a connector of the host apparatus, according to an exemplary embodiment of the present general inventive concept;
FIG. 4 is a circuit diagram illustrating a connector of a host apparatus operating in a first charring mode, according to an exemplary embodiment of the present general inventive concept;
FIG. 5 is a circuit diagram illustrating a connector of a host apparatus operating in a second charging mode, according to an exemplary embodiment of the present general inventive concept;
FIG. 6 is a flowchart illustrating a charging method of a host apparatus according to an exemplary embodiment of the present general inventive concept;
FIG. 7 is a timing chart illustrating a charging process performed between a host apparatus and a user terminal apparatus, according to an exemplary embodiment of the present general inventive concept;
FIG. 8 is a view illustrating a display screen to select a charging mode and a storage mode according to an exemplary embodiment of the present general inventive concept;
FIG. 9 is a block diagram illustrating a user terminal apparatus according to an exemplary embodiment of the present general inventive concept;
FIG. 10 is a block diagram illustrating a connection between a host apparatus and a user terminal apparatus, according to an exemplary embodiment of the present general inventive concept;
FIG. 11 is a block diagram illustrating a charging mode of a user terminal apparatus according to an exemplary embodiment of the present general inventive concept;
FIG. 12 is a block diagram illustrating a storage mode of a user terminal apparatus according to an exemplary embodiment of the present general inventive concept;
FIG. 13 is a block diagram illustrating a structure of a changer of a user terminal apparatus according to an exemplary embodiment of the present general inventive concept;
FIG. 14 is a flowchart illustrating a communication method of a user terminal apparatus according to an exemplary embodiment of the present general inventive concept; and
FIG. 15 is a timing chart illustrating a communication process of a user terminal apparatus according to an exemplary embodiment of the present general inventive concept.

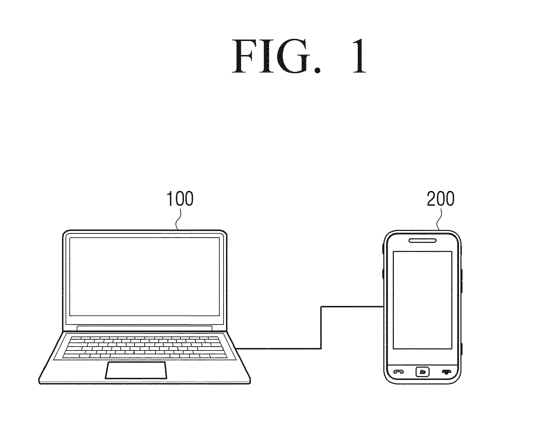

Referring to FIG. 1, a host apparatus 100 checks whether the host apparatus 100 is connected to a user terminal apparatus 200 through a cable.

The host apparatus 100 may be, for example, one of a notebook computer, a desktop computer, and a server. In other words, the host apparatus 100 may be connected to an external apparatus such as the user terminal apparatus 200 and communicate data with the connected external apparatus. The host apparatus 100 receives data from the user terminal apparatus 200 or transmits data to the user terminal apparatus 200. The host apparatus 100 stores the data received from the user terminal apparatus 200. The host apparatus 100 is supplied with power from an external source to operate and includes a battery which stores the supplied power.

The user terminal apparatus 200 may be a portable electronic apparatus such as a smart phone, a personal digital assistant (PDA), a Netbook, a digital camera, a camcorder, a portable multimedia player (PMP), or the like. The user terminal apparatus 200 includes a connector which connects the user terminal apparatus 200 to the host apparatus 100. The user terminal apparatus 200 is connected to the host apparatus 100 to perform data communication and charges the battery of the user terminal apparatus 200 by using the power supplied from the host apparatus 100.

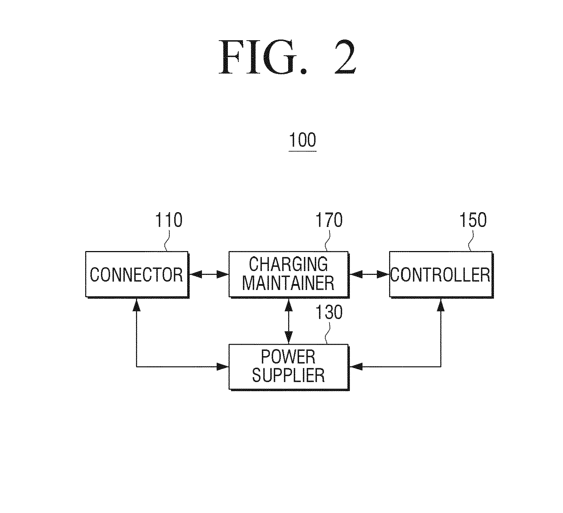

FIG. 2 is a block diagram of a host apparatus according to an exemplary embodiment of the present general inventive concept. Referring to FIG. 2, the host apparatus includes a connector 110, a power supplier (supply) 130, a controller 150, and a charging maintainer 170.

The connector 110 includes various types of terminals, or interfaces, to which the user terminal apparatus 200 is connected. For example, the various types of terminals of the connector 110 may be at least one of universal serial bus (USB) 2.0, USB 3.0, eSATA, and Institute of Electrical and Electronics Engineers (IEEE) 1394 communication interfaces.

USB 2.0 is a type of USB interface which provides a communication interface between apparatuses. In other words, a USB supports a plug-and-play function, and thus, if the user terminal apparatus 200 is connected to the host apparatus 100, the host apparatus 100 senses the user terminal apparatus 200. However, some USB apparatuses require an additional installation of software. Also, the USB 2.0 interface supports a hot swapping function, and thus connects or disconnects an apparatus or exchanges an apparatus in a power on state.

The USB 2.0 interface extends ports thereof to a maximum of 127 per controller of the host apparatus 100 and the user terminal apparatus 200. If a plurality of USB hubs (an extending apparatus for extending one USB port to several ones) are used, 127 USB apparatuses may be theoretically used per one host apparatus 100. However, in the USB 2.0 interface, user terminal apparatuses connected to one controller share a limited bandwidth. The user terminal apparatus 200 may be connected to one host apparatus 100 through 10 or less USB 2.0 ports. This results from sharing of a data bandwidth, and the USB 3.0 interface supports a wider data bandwidth in the below description. In the USB 2.0 interface, a port of the host apparatus 100 may supply power (e.g., a voltage of 5V) to the user terminal apparatus 200. Among user terminal apparatuses adopting USB 2.0 standards, a small apparatus, such as a mouse, a keyboard, an external hard disk, or the like, may operate without an additional power source. An apparatus, such as a printer, a scanner, or the like, may operate with an additional power source. If such a USB 2.0 characteristic is used, a mobile electronic apparatus, such as a smart phone, an MP3 player, a digital camera, or a camcorder, may be charged. A process of connecting the user terminal apparatus 200 to the host apparatus 100 to charge the user terminal apparatus 200 will be described later.

The USB 3.0 refers to a USB interface method of a higher version than the above-described USB 2.0 interface. The USB 3.0 interface includes a host controller, and the host controller provides two USB terminals through a root hub. The USB 3.0 interface also includes two terminals to which the user terminal apparatus 200 is connected and, if connection ports lack, a hub may be further connected to provide more ports.

127 peripheral devices may be connected to one host controller of the USB 3.0 communication interface in a tree shape. This is the same as the USB 2.0. The USB 3.0 communication interface is different from the USB 2.0 communication interface in that a rated current capacity is 5V 500mA, and a rated current capacity of the USB 3.0 communication interface is 5V/12V 900mA. The USB 3.0 communication interface is also different from the USB 2.0 communication interface in terms of a data transmission speed. In other words, the USB 2.0 communication interface shows a transmission speed of 450 Mbps to the maximum. The USB 3.0 communication interface shows a super-speed (5 GB per second).

If a speed of a test product of a user terminal apparatus using a USB 3.0 communication interface method is measured, a consecutive reading speed reaches 120 MB/s, and a writing speed reaches 103 MB/s.

eSATA is an external type of Serial Advanced Technology Attachment (SATA) used for a computer-embedded hard disk. A data transmission speed of a communication interface of the eSATA per second is a maximum of 3 Gpbs and thus is the same as that of SATA 2.0 which is an interface used for a hard disk.

Since a maximum data transmission speed of the USB 2.0 communication interface is about 480 Mbps, eSATA shows a much faster data communication speed than the USB 2.0 communication interface. eSATA supports a cable to a maximum of 2 meters, and eSATA may be used far away from a body of the host apparatus 100.

IEEE 1394 is a type of interface which is to execute a mass of high-speed data communications in a personal computer (PC) or various types of AV apparatuses. IEEE 1394 is a high-speed series interface approved by IEEE. IEEE 1394 supports a data exchange between electronic apparatuses transmitting large-scale data such as a PC, a digital camcorder or a video cassette recorder (VCR). IEEE 1394 also supports a plug & play function.

The connector 110 transmits power supplied by the power supplier 130 to the user terminal apparatus 200. For example, if a terminal of the connector 110 is a USB 2.0 communication interface, a voltage of about 5V is applied to the connector 110, and a charging voltage of 5V is supplied to the user terminal apparatus 200 connected through the USB 2.0 communication interface.

If the user terminal apparatus 200 is connected to the host apparatus 100, the host apparatus 100 recognizes whether the user terminal apparatus 200 is connected thereto, through the connector 110 having the USB 2.0 terminal. If the host apparatus 100 determines that the user terminal apparatus 200 is connected thereto, the host apparatus 100 performs a data communication at a data speed of 450 Mbps through a USB 2.0 communication interface.

The connector 110 supplies a charging voltage of 5.0 V to the user terminal apparatus 200 through a USB cable whose one side is connected to the connector 110 and other side is connected to the user terminal apparatus 200. The voltage supplied to the connector 110 may vary according to the type of interface. The connector 110 may convert and supply an amount of a voltage to the user terminal apparatus 200.

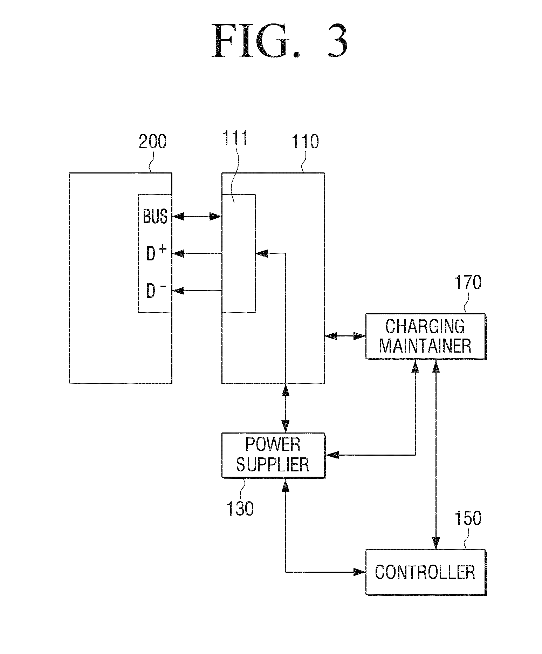

A process of connecting the user terminal apparatus 200 to the host apparatus 100 through the connector 110 having a USB 2.0 communication interface will now be described in more detail with reference to FIG. 3.

Referring to FIG. 3, an interface connecting the host apparatus 100 and the user terminal apparatus 200 to each other is a USB 2.0 communication interface. In other words, the USB 2.0 interface of the user terminal apparatus 200 includes BUS, D+, and D- terminals. The host apparatus 100 includes corresponding terminals of the USB 2.0 interface.

The BUS terminal of the terminals of the USB 2.0 interface provides a path for a data communication between the host apparatus 100 and the user terminal apparatus 200. The D+ terminal supplies power from the host apparatus 100 to the user terminal apparatus 200, and the D- terminal applies a connection signal from the user terminal apparatus 200 to the host apparatus 100.

The data communication between the host apparatus 100 and the user terminal apparatus 200 through the USB 2.0 interface is not a core content of the present general inventive concept, and thus a more detailed description will be omitted in order to prevent the scope of the present general inventive concept from becoming unclear.

However, a charging process between the host apparatus 100 and the user terminal apparatus 200 will be described in more detail below.

The power supplier 130 converts alternating current (AC) applied from an external source into direct current (DC) power and supplies the DC power to the connector 110. The power supplier 130 may also supply power to drive various types of parts constituting the host apparatus 100 to the various types of parts. Here, the power supplier 130 may include an AC-DC converter which converts the AC power into the DC power.

The power supplier 130 may further include a battery which is charged by using a voltage converted into DC power. Here, the battery may be realized as various types of rechargeable batteries, such as a natrium (sodium) ion battery, a lithium ion battery, a lithium secondary battery, a fuel battery, etc.

The controller 150 senses operation states of the parts constituting the host apparatus 100 and controls overall operations of the parts.

If the user terminal apparatus 200 is connected to the host apparatus 100 through the connector 110, the controller 150 forms a communication path with the connected user terminal apparatus 200 to perform the data communication.

The controller 150 controls the connector 110 to transmit power supplied to the connector 110 to the battery of the user terminal apparatus 200. In other words, if the controller 150 senses that the user terminal apparatus 200 is connected to the connector 110, the controller 150 controls the connector 110 to convert power to a predetermined amount according to a type of the battery of the user terminal apparatus 200. The controller 150 controls the connector 110 to supply the converted power in a voltage form appropriate to charge the battery of the user terminal apparatus 200 in compliance with a standard according to the type of interface being used. For example, where a USB interface is provided, the voltage provided to charge the user terminal apparatus will accord to the USB interface standard.

In other words, if the controller 150 senses an operation state of the host apparatus 100 to determine that the host apparatus 100 is operating in a first operation mode, the controller 150 controls the supply of power to the user terminal apparatus 200 via the connector 110 to charge the battery of the user terminal apparatus 200 with power supplied from the power supplier 130.

The controller 150 controls the supply of power to the user terminal apparatus 200 in order to charge the battery of the user terminal apparatus 200 with power according to an operation mode state of the host apparatus 100. This will now be described in more detail.

If the host apparatus 100 according to the present exemplary embodiment is operating in a first operation mode, the host apparatus 100 maintains a communication connection to the user terminal apparatus 200 and supplies power to the user terminal apparatus 200 to charge the battery of the user terminal apparatus 200.

Here, the first operation mode refers to a state in which power is supplied to the host apparatus 100 to perform its normal operating functions, for example, power is supplied to a display of the host apparatus 100 to display a particular screen, a clock control signal to control the parts of the host apparatus 100 is generated, and the communication connection to the user terminal apparatus 200 is maintained.

If the host apparatus 100 is operating in the first operation mode, the controller 150 is supplied with an operating voltage from the power supplier 130. Here, the operating voltage corresponds to a voltage needed to drive the controller 150.

Table 1 below shows rechargeable states and non-chargeable states according to an operation mode of the host apparatus 100 if the host apparatus 100 charges the user terminal apparatus 200 according to battery charging specs.

**[Table 1]**

| S-State | Display | System CLK | Description |
|---|---|---|---|
| S0 | On | On | Operation Mode |
| S3 | Off | Off excepting RTC | Standby Mode |
| S4 | Off | Off excepting RTC | Maximum Saving Mode |
| S5 | Off | Off excepting RTC | Power Off, Adapter-applied State |

Table 1 above shows classified operation states (S-State) of the host apparatus 100. A situation of the host apparatus 100 charging the battery of the user terminal apparatus 200 may vary according to the operation state of the host apparatus 100.

For example, if the host apparatus 100 is in an operation mode of state So, the host apparatus 100 normally operates. If the host apparatus 100 operates in the state S0, the controller 150 of the host apparatus 100 performs an enable operation. In other words, the controller 150 operates the display of the host apparatus 100 and generates a clock signal CLK to control other elements. The host apparatus 100 in the state S0 maintains the communication connection to the user terminal apparatus 200 and receives information about a charging request signal, an apparatus type, a battery charging condition, etc., from the user terminal apparatus 200. The host apparatus 100 supplies a charging voltage to the user terminal apparatus 200 to charge the battery of the user terminal apparatus 200 based on the received information.

If the host apparatus 100 is in one of states S3, S4, and S5, the host apparatus 100 operates in one of a standby mode, a maximum saving mode, and a power-off mode. The host apparatus 100 in one of these states generates an additional clock signal not to control other elements, except that the controller 150 generates a RTC (Real Time Clock) signal. In other words, the host apparatus 100 does not recognize whether the user terminal apparatus 200 is connected thereto and thus does not receive the information about the charging request signal, the apparatus type, the battery charging condition, etc. from the user terminal apparatus 200.

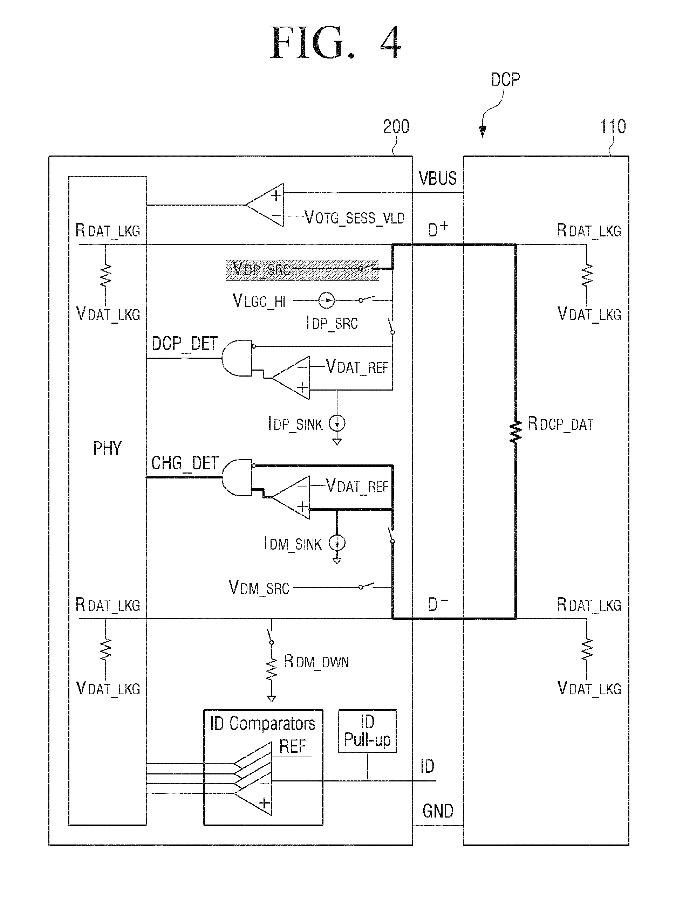

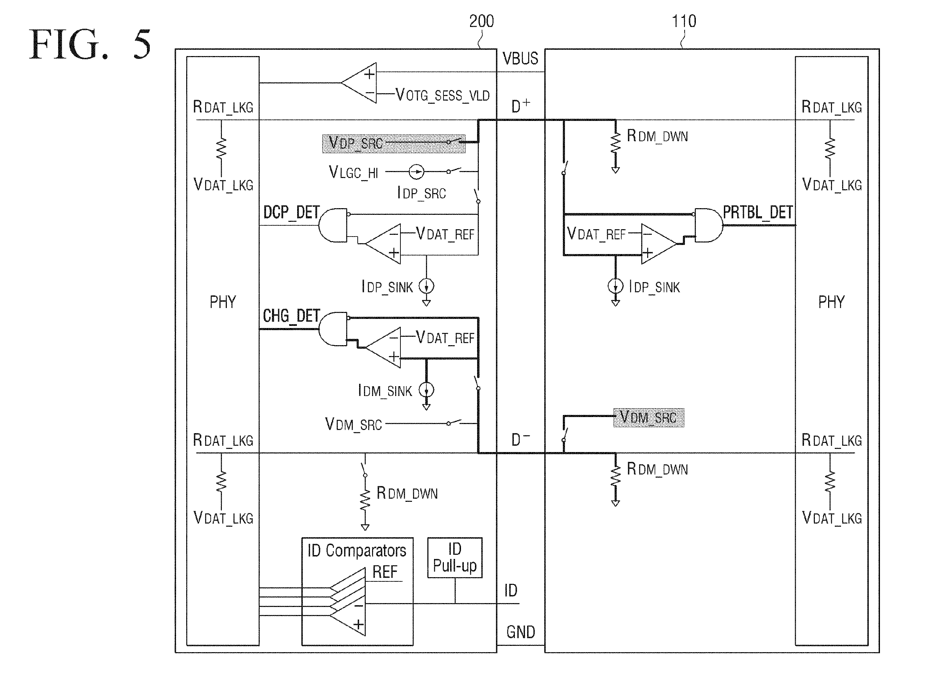

A detailed process of operating the host apparatus 100 in first and second charging modes if the host apparatus 100 operates in the state S0 will now be described with reference to FIGS. 4 and 5.

FIG. 4 is a view illustrating the connector 110 of the host apparatus 100 which operates as a dedicated charging port (DCP) defined in a USB 2.0 host or hub.

Referring to FIG. 4, if the connector 110 operates as the DCP, the user terminal apparatus 200 turns on IDM_SINK and, if the DCP of the host apparatus 100 shorts through a resistance of RDCP_DAT between D+ and D-, senses D- voltage as VDP_SRC. The user terminal apparatus 200 compares amounts of the D- and VDAT_REF voltages and, if the amount of the D- voltage is greater than the amount of the VDAT_REF voltage, recognizes that the user terminal apparatus 200 is connected to the connector 110 of the host apparatus 100. If it is recognized that the user terminal apparatus 200 is connected to the host apparatus 100, the host apparatus 100 supplies power to the user terminal apparatus 200 to charge the battery of the user terminal apparatus 200.

FIG. 5 is a view illustrating the connector 110 of the host apparatus 100 which operates as a charging downstream port (CDP).

Referring to FIG. 5, if the connector 110 of the host apparatus 100 operates as the CDP, the host apparatus 100 applies VDM-SRC voltage to a D- terminal for 200 ms to enable VDM_SRC. The host apparatus 100 removes the VDM_SRC voltage from the D-terminal to disable the VDM_SRC. The host apparatus 100 compares a voltage of D+ with V_LGC and VDP_SRC. If the voltage of the D+ is greater than VDAT_REF and smaller than L_LGC, the CDP of the connector 110 of the host apparatus 100 enables VDM_SRC. If the voltage of the D+ is smaller than VDAT_REF and greater than V_LGC, the CDP of the connector 110 of the host apparatus 100 disables VDM_SRC.

If the user terminal apparatus 200 is connected to the host apparatus 100 through the connector 110 of the host apparatus 100, the D+ terminal of the user terminal apparatus 200 and the connector 110 compares V_LGC with the voltage of the D+ terminal to disable VDM_SRC. The user terminal apparatus 200 turns on VDP_SRC and IDM_SINK for an initial connection recognition, compares a voltage of a D-terminal with VDAT_REF, and, if an intensity of the voltage of the D- terminal is greater than VDAT_REF, recognizes that the user terminal apparatus 200 is connected to the host apparatus 100.

As described above, a USB 2.0 communication interface operates in first and second charging modes. Therefore, if it is recognized that the host apparatus 100 and the user terminal apparatus 200 are connected to each other, the host apparatus 100 receives information about charging from the user terminal apparatus 200.

Hereinafter, various types of interfaces of the connector 110 other than a USB 2.0 communication interface terminal will be described.

In a first operation mode, the controller 150 maintains a communication connection state with the user terminal apparatus 200. In other words, with maintaining the communication connection state with the user terminal apparatus 200, the controller 150 controls the connector 110 to apply power supplied to the connector 110 to the user terminal apparatus 200 through a communication cable.

If the host apparatus 100 operates in a second operation mode, an operation of the controller 150 stops, and thus a communication connection between the host apparatus 100 and the user terminal apparatus 200 is disconnected.

In other words, the second operation mode refers to a state in which power is not supplied to the display of the host apparatus 100, a display screen is turned off, a screen protecting operation operates, a clock control signal to control the parts of the host apparatus 100 is not generated, or the communication connection to the user terminal apparatus 200 is not maintained. This is a mode in which less power is used than in the first operation mode, whether this is because it is a standby mode or other type of power saving mode. In this mode, the controller is typically switched off to save power.

In particular, if the host apparatus 100 operates in the second operation mode, the controller 150 is supplied with a voltage less than a preset amount from the power supplier 130. Here, the preset amount of voltage is less than a threshold voltage to drive the controller 150.

In the second operation mode, the controller 150 is not driven and cannot therefore control the supply of power to the connector 110 to be supplied to the user terminal apparatus 200 through the communication cable. In this case, if the user terminal apparatus 200 is connected to the host apparatus 100 through the connector 110 even in the second operation mode, the charging maintainer 170 may charge the battery of the user terminal apparatus 200 by using the power supplied to the connector 110. This will now be described in more detail below.

If the host apparatus 100 operates in the second operation mode, the charging maintainer 170 maintains the connection to the user terminal apparatus 200 to maintain a state of applying the power supplied to the connector 110 to the user terminal apparatus 100.

This will be described in more detail. Even if the operation of the controller 150 stops, the charging maintainer 170 maintains the connection between the host apparatus 100 and the user terminal apparatus 200. In other words, in the first operation mode, the controller 150 performs a control operation to maintain the communication connection to the user terminal apparatus 200 through the connector 110 to maintain a charging condition between the host apparatus 100 and the user terminal apparatus 220.

In the second operation mode, the controller 150 stops its operation. Therefore, the charging maintainer 170 performs the control operation to maintain the connection between the host apparatus 100 and the user terminal apparatus 200 to maintain the charging condition between the host apparatus 100 and the user terminal apparatus 200.

Here, the charging condition refers to a condition to perform charging between the host apparatus 100 and the user terminal apparatus 200. In other words, the user terminal apparatus 200 transmits a connection signal to the host apparatus 100, and the host apparatus 100 responds to the connection signal to convert power into a form appropriate for the battery of the user terminal apparatus 200 and supply the converted power to the user terminal apparatus 200.

The charging maintainer 170 senses an amount of a supplied voltage and, if the sensed amount of the voltage is less than a preset amount, determines that the operation of the controller 150 stops. The charging maintainer 170 determines the stopped state of the operation of the controller 150 as a state in which the host apparatus 100 operates in the second operation mode. The charging maintainer 170 may charge the battery of the user terminal apparatus 200 with power supplied from the power supplier 130 only if the host apparatus 100 operates in the second operation mode.

The charging maintainer 170 may be an auxiliary controller, for example a control circuit that remains powered even when the main controller of the host apparatus, the controller 150, is not powered, for example because the host apparatus has entered a standby or other power saving state. The auxiliary controller executes only those functions that are necessary to maintain the connection with the user terminal apparatus in the event that the main controller 150 is powered down, so that the user terminal apparatus can be charged from the power supplier 130 of the host apparatus. The power requirements of the auxiliary controller will typical be significantly less than the power requirements of the main controller 150.

The host apparatus 100 recognizes a connection to the user terminal apparatus 200 and determines an operation of the host apparatus 100. Here, the host apparatus 100 determines a case where an amount of a voltage supplied to the controller 150 is greater than a preset amount as the first operation mode and a case where the amount of the voltage is less than the preset amount as the second operation mode.

It would be appreciated by the skilled person that the charging maintainer could be aware of the operation state of the host apparatus in numerous other ways, for example by a voltage signal at a given input of the charging maintainer being high in the normal operating state (the first operation mode) and low in the standby state (the second operation mode).

If the determined operation mode is the first operation mode, the host apparatus 100 charges the user terminal apparatus 200. The host apparatus 100 charges the battery of the user terminal apparatus 200 with a voltage according to a method complying with a type of a terminal of a connector. Here, the type of the terminal may be at least one of USB 2.0, USB 3.0, HDMI, SATA, and IEEE 1394 interfaces. A standard of a corresponding communication interface is well known to those of ordinary skill in the art, and thus a detailed description thereof will be omitted.

If the host apparatus 100 operates in the second operation mode, the host apparatus 100 resets or maintains the connection to the user terminal apparatus 200 in order to charge the battery of the user terminal apparatus 200.

A charging process between the host apparatus 100 and the user terminal apparatus 200 will now be described in more detail.

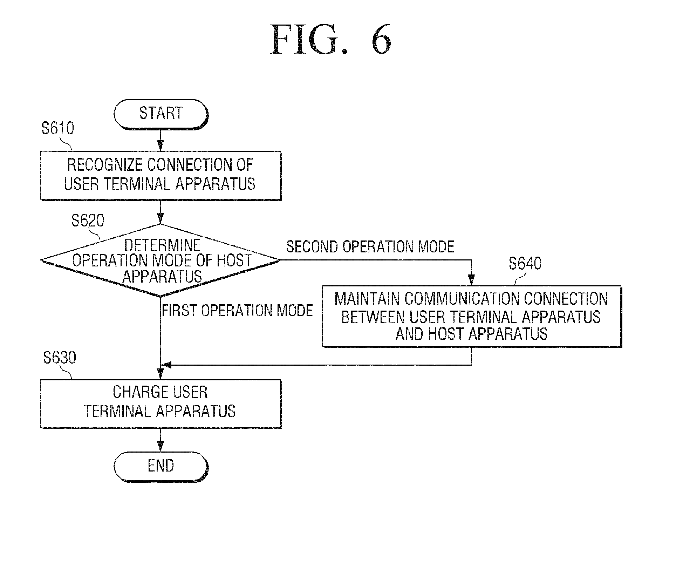

FIG. 6 is a flowchart illustrating a charging method of a host apparatus according to an exemplary embodiment of the present general inventive concept.

Referring to FIG. 6, in operation S610, the host apparatus 100 recognizes whether the user terminal apparatus 200 is connected thereto. As described above, the host apparatus 100 may recognize the connection to the user terminal apparatus 200 in various methods according to a communication interface method of a connector between the host apparatus 100 and the user terminal apparatus 200. For example, the host apparatus 100 may recognize the connection between the host apparatus 100 and the user terminal apparatus 200 by using a voltage of D+ and D- terminals of a USB 2.0 interface.

In operation S620, the host apparatus 100 determines an operation mode of the host apparatus 100. In other words, the host apparatus 100 determines whether the host apparatus 100 is operating in a first or second operation mode. In more detail, if a voltage applied to the controller 150 of the host apparatus 100 is greater than or equal to a preset amount, an operation of the controller 150 is maintained, and thus the host apparatus 100 determines that the host apparatus 100 operates in the first operation mode. If the voltage applied to the controller 150 of the host apparatus 100 is less than the preset amount, the operation of the controller 150 stops, and thus the host apparatus 100 determines that the host apparatus 100 operates in the second operation mode.

If the host apparatus 100 determines that the host apparatus 100 operates in the second operation mode, the host apparatus 100 maintains a communication connection to the user terminal apparatus 200 in operation S640. In other words, the charging maintainer 170 of the host apparatus 100 determines whether an operation state of the controller 150 is in one of a standby mode, a maximum saving mode, and a power-off mode. If the operation state of the controller 150 is in one of the standby mode, the maximum saving mode, and the power-off mode, the charging maintainer 170 maintains the communication connection performed by the controller 150 between the host apparatus 100 and the user terminal apparatus 200.

If the host apparatus 100 is operating in the first operation mode, the host apparatus 100 maintains the communication connection to the user terminal apparatus 200 and supplies power to the user terminal apparatus 200 to charge the battery of the user terminal apparatus 200 under control of the controller 150. If the host apparatus 100 operates in the second operation mode, the charging maintainer 170 maintains the communication connection to the user terminal apparatus 200 and supplies the power to the user terminal apparatus 200 to charge the battery of the user terminal apparatus 200.

In other words, in the charging method of the host apparatus 100 according to the present exemplary embodiment, even if the host apparatus 100 operates in a power saving mode, the host apparatus 100 can maintain a connection to a user terminal apparatus 200 to charge the battery of the user terminal apparatus 200. Therefore, unnecessary power consumption is reduced in the host apparatus 200, and a charging voltage is applied to the user terminal apparatus 200, thereby improving efficiency of power management.

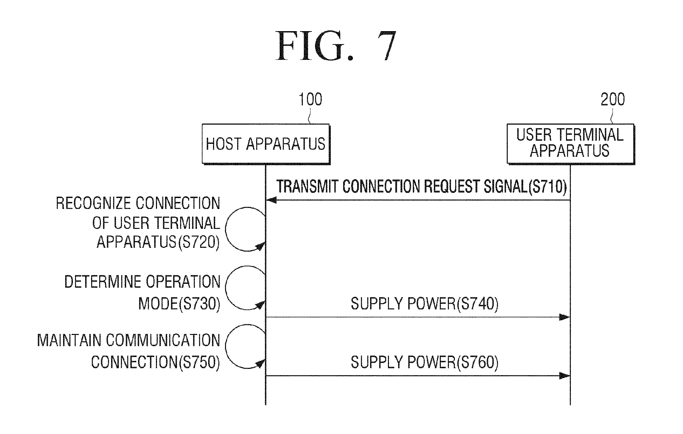

FIG. 7 is a flowchart illustrating a charging process between a host apparatus and a user terminal apparatus according to another exemplary embodiment of the present general inventive concept.

Referring to FIG. 7, if the host apparatus 100 and the user terminal apparatus 200 are connected to each other through a connector, the user terminal apparatus 200 transmits a connection request signal to the host apparatus 100 in operation S710. The host apparatus 100 may allow the connection of the user terminal apparatus 200 in response to the connection request signal transmitted from the user terminal apparatus 200 according to a communication interface between the host apparatus 100 and the user terminal apparatus 200. For example, if the host apparatus 100 and the user terminal apparatus 200 are connected to each other through a USB interface, the host apparatus 100 may automatically recognize the user terminal apparatus 200 according to a plug & plug method.

In operation S720, the host apparatus 100 recognizes the connection of the user terminal apparatus 200 according to the connection request signal of the user terminal apparatus 200.

The host apparatus 100 may change a standby mode or a power saving mode to a determination mode according to the connection request signal of the user terminal apparatus 200. In other words, according to the present exemplary embodiment, the host apparatus 100 may change an operation state to a determination mode state due to the connection of the user terminal apparatus 200.

If the host apparatus 100 is enabled by the connection request signal of the user terminal apparatus 200, the host apparatus 100 determines a current operation mode in operation S730. In other words, if the host apparatus 100 is in a normal operation mode, the host apparatus 100 determines the current operation mode as a first operation mode to maintain a communication connection between the host apparatus 100 and the user terminal apparatus 200. If the host apparatus 100 is in a standby mode, a maximum saving mode, or a power-off state, the host apparatus 100 determines the current operation mode as a second operation mode.

If the host apparatus 100 operates in the first operation mode, the host apparatus 100 supplies power to the user terminal apparatus 200 to charge the battery of the user terminal apparatus 200 in operation S740. The host apparatus 100 operating in the first operation mode also maintains the communication connection to the user terminal apparatus 200. Therefore, a condition to perform a charging operation is met. Therefore, the host apparatus 100 may charge the user terminal apparatus 200 by using pre-charged power or power supplied from an external power supplying apparatus.

If the host apparatus 100 operates in the second operation mode, the host apparatus 100 can maintain the communication connection between the host apparatus 100 and the user terminal apparatus 200 in operation S750. In other words, if the host apparatus 100 operates in the maximum saving mode, a communication path with the user terminal apparatus 200 may be disconnected, but in this case, the charging maintainer 170 of the host apparatus 100 restores the communication connection with the user terminal apparatus 200 to maintain the communication connection. Here, the maintenance of the communication connection is to re-search whether the user terminal apparatus 200 is connected to the host apparatus 220 and restores the communication connection of the user terminal apparatus 200 or maintains a connected communication path.

In operation S760, the host apparatus 100 supplies a charging voltage only to the user terminal 200 whose communication connection is restored or maintained to charge the battery of the user terminal apparatus 200.

The host apparatus 100 according to the present exemplary embodiment may further include a display which displays a screen through which a charging mode and a storage mode are selected. Here, the display may be realized as various types of displays such as a liquid crystal display (LCD), a light-emitting diode (LED), a plasma display panel (PDP), a cathode ray tube (CRT), and so on.

If a user connects the user terminal apparatus 200 to the host apparatus 100, a screen to select a charging mode and a storage mode may be displayed on at least one of the host apparatus 100 and the user terminal apparatus 200.

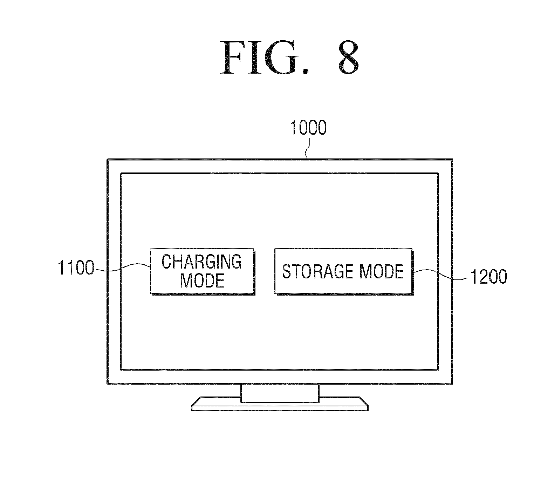

Referring to FIG. 8, if the host apparatus 100 is a personal computer (PC), a display 1000 displays a window 1100 to select a charging mode and a window 1200 to select a storage mode.

The display 1000 may be realized as an LCD monitor including a touch panel which recognizes a touch of a user. Alternatively, the display 1000 may be realized as a display apparatus which includes a camera, an operation sensor, an acoustic sensor, or the like which senses a gesture of the user to select the charging mode and the storage mode. A detailed description of these operations is easy to understand to one of ordinary skill in the art, and therefore a technical characteristic of the present general inventive concept will be omitted for brevity of the application.

If the user selects the window 1100 to select the charging mode displayed on the display 1000, a charging operation is performed between the host apparatus 100 and the user terminal apparatus 200.

If the user selects the window 1200 to select the storage mode displayed on the display 1000, a storage operation is performed between the host apparatus 100 and the user terminal apparatus 200.

In FIG. 8, a charging mode window and a storage mode window displayed on a display is selected to enter one of charging and storage modes. However, the charging mode and the storage mode may be simultaneously performed. In other words, the host apparatus 100 may operate in the charging mode to charge the user terminal apparatus 200 and simultaneously perform reading/writing operations of data between the host apparatus 100 and the user terminal apparatus 200.

The display 1000 of FIG. 8 has a large-scale monitor shape and may be realized as a display of the user terminal apparatus 200 in a small size or may be omitted.

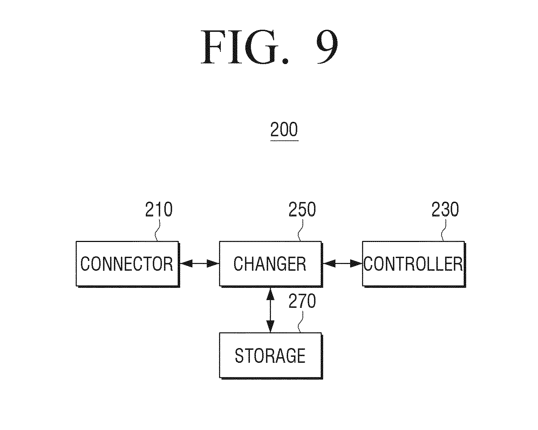

Referring to FIG. 9, the user terminal apparatus 200 includes a connector 210, a controller 230, a changer 250, and a storage 270.

The connector 210 includes a terminal which is connected to the connector 110 of the host apparatus 100 using the same communication interface as the user terminal apparatus 200. The connector 210 may be supplied with power through the connector 110 of the host apparatus 100 or may perform a data communication. The connector 210 may be realized as at least one of USB 2.0, USB 3.0, SATA, and IEEE 1394 interfaces.

The controller 230 controls to receive data from the host apparatus 100 and other peripheral devices through the connector 210 and store the data in the storage 270. The controller 230 also controls to charge a rechargeable battery of the user terminal apparatus 200 by using a voltage supplied from the host apparatus 100. Here, the battery of the user terminal apparatus 200 may be realized as a rechargeable secondary battery, such as a lithium battery, a natrium ion battery, a lithium secondary battery, a fuel battery, or the like.

If the user terminal apparatus 200 is connected to the host apparatus 100 through the connector 210, the changer 250 provides a first path between the storage 270 and the host apparatus 100. In other words, the changer 250 may provide a first path as a communication path which is to connect the user terminal apparatus 200 to the host apparatus 100 and directly connect the storage 270 of the user terminal apparatus 200 to the host apparatus 100.

If the host apparatus 100 and the user terminal apparatus 200 operate in a charging mode, the changer 250 may additionally provide a charging path between the controller 230 of the user terminal apparatus 200 and the host apparatus 100. In other words, in the charging mode, the changer 250 may control to provide a first path to directly connect the storage 270 of the user terminal apparatus 200 to the host apparatus 100 as well as provide a charging path between the controller 230 of the user terminal apparatus 200 and the host apparatus 100.

If data reading and writing commands are received from the host apparatus 100 through the connector 210, the changer 250 blocks a second path between the controller 230 and the storage 270. The changer 250 transmits data through the first path according to the received data reading and writing commands.

The storage 270 may be realized as various types of memory devices which store or read data and output the data to the outside. For example, the storage 270 may be realized as various types such as a hard disk drive (HDD), a solid state drive (SSD), a random access memory, a static RAM (SRAM), a flash memory, etc.

The storage 270 is controlled by the controller 230 to store data or output stored data to the outside. A communication bus between the storage 270 and the controller 230 has a data communication capacity having a preset size. In other words, the storage 270 is connected to the controller 230 of the user terminal apparatus 200, and the controller 230 is connected to the connector 110 of the host apparatus 100 through the connector 210.

Here a data communication speed between the storage 270 and the controller 230 is much lower than a data communication speed between the connector 210 of the user terminal apparatus 200 and the connector 110 of the host apparatus 100. A logic design of the controller 230 is changed to improve the data communication speed between the storage 270 and the controller 230, thereby increasing a size of the controller 230. If a communication path is additionally installed between the controller 230 and the storage 270, a size of the user terminal apparatus 200 is increased by an increased size of the communication bus.

Therefore, the communication bus between the storage 270 and the controller 230 is not easily additionally installed. As a result, the user terminal apparatus 200 according to the present exemplary embodiment further includes the changer 250 between the storage 270 and the controller 230. If the user terminal apparatus 200 is connected to the host apparatus 100, the storage 270 of the user terminal apparatus 200 is controlled by the host apparatus 100 to provide a first path through which the storage 270 operates as an external storage.

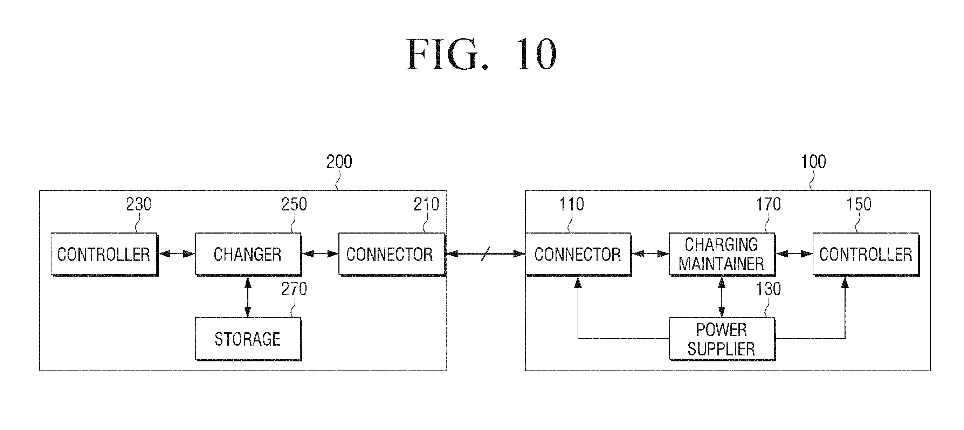

Referring to FIG. 10, the host apparatus 100 includes the connector 110, the power supplier 130, the controller 150, and the charging maintainer 170. The user terminal apparatus 200 includes the connector 210, the controller 230, the changer 250, and the storage 270. The connectors 110 and 210 including the same communication interface terminal are connected to each other to connect the host apparatus 100 and the user terminal apparatus 200 to each other. A cable directly connecting the connectors 110 and 210 to each other may be a physical cable such as a USB cable.

If the user terminal apparatus 200 is connected to the host apparatus 100, the changer 250 of the user terminal apparatus 200 differently operates according to a charging mode and a storage mode. Here, if the changer 250 operates in the charging mode, the changer 250 forms a charging path between the connector 210 and the controller 230 to charge the battery of the user terminal apparatus 20 by using power supplied from the host apparatus 100.

In the storage mode, the changer 250 blocks a communication path between the controller 230 and the storage 270 and forms a first path as a communication path between the storage 270 and the connector 210 to form a direct communication path with the host apparatus 100. The first path is to directly connect the storage 270 and the connector 210, and thus the storage 270 is connected to the connector 110 through the connector 210 and is directly controlled by the controller 150.

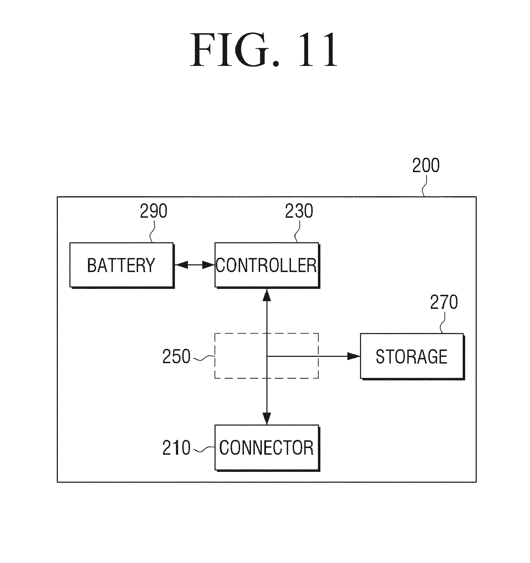

Referring to FIG. 11, the user terminal apparatus 200 includes the connector 210, the controller 230, the changer 250, the storage 270, and a battery 290. The user terminal apparatus 200 is connected to the host apparatus 100 and is supplied with a charging voltage from the host apparatus 100.

The user terminal apparatus 200 receives the charging voltage from the host apparatus 100 through the connector 210. The battery 290 is charged with the charging voltage under control of the controller 230, and thus the changer 250 forms a charging path between the connector 210 and the controller 230.

The user terminal apparatus 200 charges the battery 290 by using the charging voltage applied from the host apparatus 100 through the connector 210. Here, the changer 250 may form a second path between the controller 230 and the storage 270.

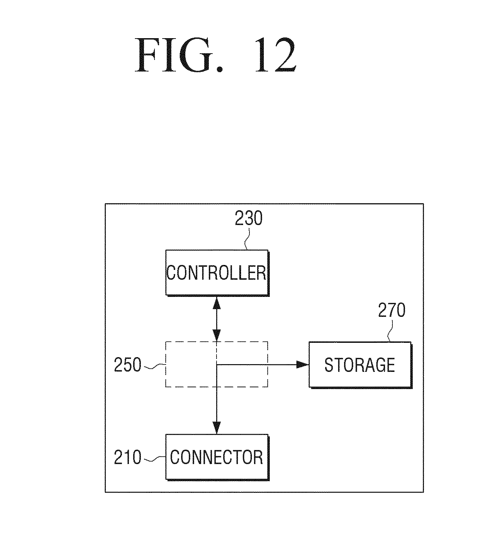

Referring to FIG. 12, the user terminal apparatus 200 includes the connector 210, the controller 230, the changer 250, and the storage 270. The user terminal apparatus 200 is connected to the host apparatus 100 and receives data reading/writing commands from the host apparatus 100.

The user terminal apparatus 200 reads or writes data stored in the storage 270 according to the data reading/writing commands received from the host apparatus 100 through the connector 210. In other words, the user terminal apparatus 200 forms a first path through the changer 250. Here, the first path is a communication path which directly connects the connector 210 and the storage 270 to each other.

The user terminal apparatus 200 stores data in the storage 270 according to the reading/writing data commands received from the host apparatus 100 or reads stored data and transmits the read data to the host apparatus 100 through the connector 210.

As described above, the changer 250 forms a communication path to operate in at least one of a charging mode and a storage mode according to a connection form and an operation mode between the user terminal apparatus 200 and the host apparatus 100. The changer 250, which is also referred to herein as switching means, will now be described in more detail.

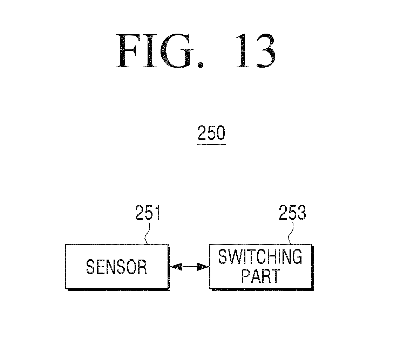

Referring to FIG. 13, the changer 250 includes a sensor 251 and a switching part 253. The sensor 251 senses a connection state between the user terminal apparatus 200 and the host apparatus 100. The sensor 251 senses whether a communication connection is maintained between the user terminal apparatus 200 and the host apparatus 100, and whether data reading/writing commands are received from the host apparatus 100.

If the sensor 251 senses that the data reading/writing commands are received from the host apparatus 100, the sensor 251 controls the switching part 253 to change a communication path in order to form a first path.

If the sensor 251 senses that the data reading/writing commands are not received from the host apparatus 100, the sensor 251 controls the switching part 253 to form a charging path.

The switching part 253 forms at least one of first and second paths to provide a communication path and a charging path to provide a charging operation and a storage operation between the user terminal apparatus 200 and the host apparatus 100 according to a control signal of the sensor 251.

The switching part 253 may be realized as a field effect transistor (FET) switch or various types of switching elements. The FET switch or the switching elements are well known to those having ordinary skill in the art, and thus detailed descriptions thereof will be omitted.

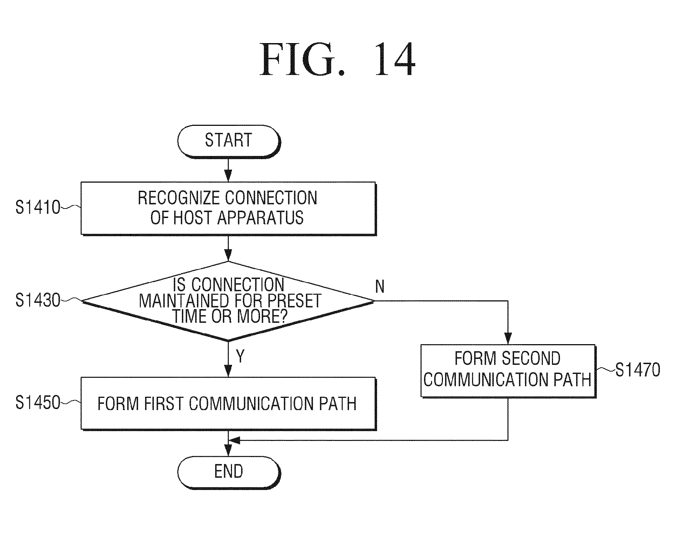

Referring to FIG. 14, in operation S1410, the user terminal apparatus 200 recognizes a connection thereof to the host apparatus 100. If a communication interface connecting the user terminal apparatus 200 and the host apparatus 100 supports a plug & plug function, e.g., is a USB 2.0, USB 3.0, or IEEE 1394 interface, the user terminal apparatus 200 is connected to the host apparatus 100 through a connector, and the host apparatus 100 automatically recognizes the user terminal apparatus 200. If the host apparatus 100 recognizes the user terminal apparatus 200 to transmit a connection permitting signal to the user terminal apparatus 200, the user terminal apparatus 200 recognizes a connection of the host apparatus 100.

In operation S1430, the user terminal apparatus 200 determines whether the user terminal apparatus 200 maintains the connection to the host apparatus 100 for a preset time or longer.

If it is determined in operation S1430 that the user terminal apparatus 200 maintains the connection to the host apparatus 100 for the preset time or longer, the user terminal apparatus 200 forms a first communication path with the host apparatus 100 in operation S1450. In other words, if the connection between the user terminal apparatus 200 and the host apparatus 100 is maintained for the preset time or longer, this refers to a state in which the communication connection is maintained. This means that the host apparatus 100 operates in a first operation mode. In this case, the host apparatus 100 and the user terminal apparatus 200 perform a data communication, and the user terminal apparatus 200 charges a battery thereof by using power supplied from the host apparatus 100.

If it is determined in operation S1430 that the user terminal apparatus 200 does not maintain the connection to the host apparatus 100 for the preset time or longer, the user terminal apparatus 200 forms a second path as a communication path between the controller 230 and the storage 270 and forms a charging path between the controller 230 and the connector 210.

In this case, the user terminal apparatus 200 and the host apparatus 100 do not directly perform the data communication, but the user terminal apparatus 200 receives a charging voltage from the host apparatus 100 and charges the battery 290 of the user terminal apparatus 200 by using the charging voltage.

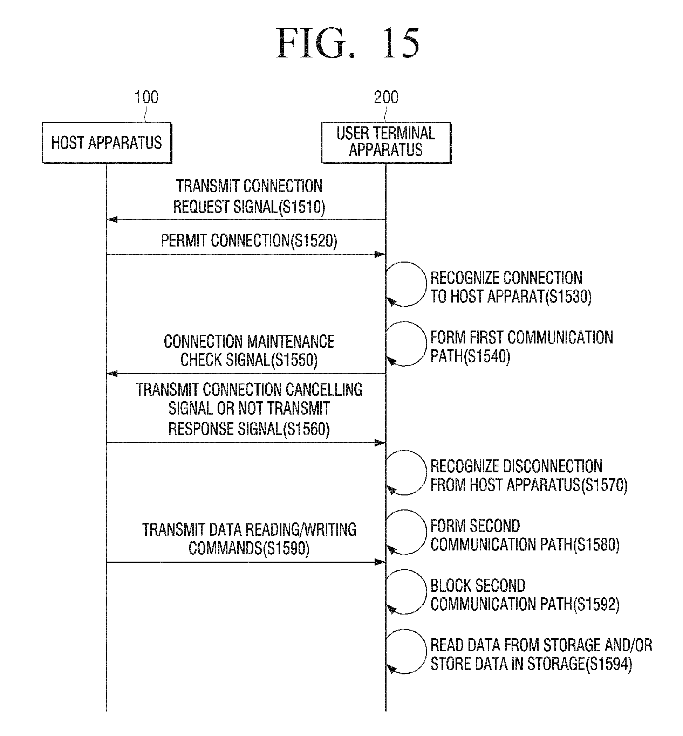

A data communication process between the user terminal apparatus 200 and the host apparatus 100 will be described in more detail with reference to FIG. 15.

If the user terminal apparatus 200 is connected to the host apparatus 100, the user terminal apparatus 200 transmits a connection request signal in operation S1510. According to an exemplary embodiment, the user terminal apparatus 200 may not transmit the connection request signal and may automatically recognize a connection to the host apparatus 100 to form a communication path between the user terminal apparatus 200 and the host apparatus 100. A process of transmitting a connection request signal to receive a connection permission will be mainly described.

In operation S1520, the user terminal apparatus 200 receives a connection permission signal from the host apparatus 100. The connection permission signal may be an additional data signal. However, the host apparatus 100 may apply a driving voltage, e.g. a driving voltage of 5V through a USB interface, to the user terminal apparatus 200 between the connectors 110 and 210 to permit a connection of the user terminal apparatus 200.

In operation S1530, the user terminal apparatus 200 recognizes the connection to the host apparatus 100.

In operation S1540, the user terminal apparatus 200 forms a first communication path to perform a data communication with the host apparatus 100. After forming the first communication path, the user terminal apparatus 200 may transmit a check signal to the host apparatus 100 to check a connection maintenance. The transmission of the check signal is an operation which is to check whether the host apparatus 100 is in a power saving mode, a standby mode, or a power-off mode.

In operation S1560, the host apparatus 100 transmits a connection cancelling signal or does not transmit a response signal within a preset time. In operation S1570, the user terminal apparatus 200 recognizes that the user terminal apparatus 200 is disconnected from the host apparatus 100.

If the user terminal apparatus 200 recognizes in operation S1570 that the user terminal apparatus 200 is disconnected from the host apparatus 100, the user terminal apparatus 200 restores or forms a second communication path which is to connect the controller 230 and the storage 270 of the user terminal apparatus 200 in operation S1580.

If the host apparatus 100 exits the standby mode, the power saving mode, or the power-off mode to re-set or restore the communication connection to the user terminal apparatus 200, the host apparatus 100 transmits data reading/writing commands to the user terminal apparatus 200 which maintains the connection thereof to the host apparatus 100, in operation S1590.

If the user terminal apparatus 200 receives the data reading/writing commands from the host apparatus 100 when the second communication path is formed, the user terminal apparatus 200 blocks the second communication path in operation S1592. If the second communication path is blocked, the controller 230 does not perform a communication with the storage 270, and the storage 270 of the user terminal apparatus 200 performs a reading/writing operation of data under control of the host apparatus 100 connected through the changer 250 and the connectors 210 and 110 in operation S1594.

The user terminal apparatus 200 provides power supplied from the host apparatus 100 to the battery 290 through a charging path connecting the connector 210, the changer 250, and the controller 230 in order to charge the battery 290.

As described above, a charging method using a host apparatus and a communication method using a user terminal apparatus may be applied to the host apparatus and the user terminal apparatus and may be realized as at least one execution program to execute the charging method and the communication method.

A program for performing methods according to the above-described various exemplary embodiments of the present general inventive concept may be stored and used on various types of recording media. In detail, a code for performing the above-described methods may be stored on various types of computer readable recording media such as a RAM, a flash memory, a read only memory (ROM), an erasable programmable ROM (EPROM), an electrically erasable and programmable ROM (EEPROM), a register, a hard disk, a removable disk, a memory card, a USB memory, a CD-ROM, and so on.

## Claims

1. A host apparatus (100) connectable to a user terminal apparatus (200), the host apparatus comprising:
a connector (110) configured to connect to the user terminal apparatus;
a power supply (130) for supplying power to the connector;
a controller (150); and
a charging maintainer (170);
wherein the host apparatus is arranged to operate in a first operation mode in which the controller (150) is arranged to control the supply of power to the user terminal apparatus for charging a battery of the user terminal apparatus; and
the host apparatus is arranged to operate in a second operation mode in which the charging maintainer (170) is arranged to control the supply of power to the user terminal apparatus for charging a battery of the user terminal apparatus.

2. The host apparatus of claim 1, wherein the first operation mode is a normal operating mode of the host apparatus and the second operation mode is a standby or power saving mode of the host apparatus.

3. The host apparatus of claim 1 or 2, wherein the charging maintainer is arranged to determine a state in which the voltage supplied to the controller is less than a predetermined voltage, and thus an operation of the controller stops, as the second operation mode, and is arranged to control the supply of power only in the second operation mode.

4. The host apparatus of claim 1, 2 or 3, wherein:
the controller is arranged to maintain a connection to the user terminal apparatus in the first operation mode; and
the charging maintainer is arranged to maintain the connection to the user terminal apparatus in the second operation mode.

5. The host apparatus of any one of the preceding claims, wherein if the host apparatus senses that the user terminal apparatus is connected to the connector, the controller is arranged to provide power to the connector in accordance with the interface type.

6. The host apparatus of claim 5, wherein the interface type is USB 2.0, USB 3.0, HDMI or an IEEE 1394 interface.

7. The host apparatus of any one of the preceding claims, further comprising:
a display for displaying a user interface UI screen for selecting between a charging mode and a data communication mode.

8. A method of charging a user terminal apparatus that is connectable to a host apparatus, the method comprising:
detecting a connection to the user terminal apparatus;
determining an operation mode of the host apparatus; and
if the determined operation mode is a first operation mode, charging the user terminal apparatus,
wherein if the determined operation mode is a second operation mode in which a power requirement of the host apparatus is less than that of the first operation mode, maintaining a connection between the user terminal apparatus and the host apparatus to charge the user terminal apparatus.

9. The method of claim 8, wherein:
if the voltage supplied to a controller of the host apparatus is greater than a preset amount, the operation mode of the host apparatus is determined as the first operation mode; and
if the voltage is less than the preset amount, the operation mode of the host apparatus is determined as the second operation mode.

10. The method of claim 9, wherein if the operation mode of the host apparatus is the first operation mode, the connection between the host apparatus and the user terminal apparatus is maintained by the controller to charge the battery of the user terminal apparatus.

11. The method of claim 9 or 10, wherein if the operation mode of the host apparatus is the second operation mode, the connection between the host apparatus and the user terminal apparatus is maintained by an auxiliary controller.

12. The method of any one of claims 8 to 11, wherein the charging of the user terminal apparatus comprises:
if the connection of the user terminal apparatus is sensed, supplying power to the user terminal apparatus in accordance with the interface type.

13. The method of claim 12, wherein the interface type comprises at least one of USB 2.0, USB 3.0, HDMI, SATA, and IEEE 1394 terminal interfaces.

14. The method of any one of claims 8 to 13, further comprising:
displaying a UI screen to select one of a charging mode and a data communication mode.
